# EUROPEAN PATENT APPLICATION

(11) **EP 4 524 743 A1**
(43) Date of publication of application: **19.03.2025**
(21) Application number: 23802646.2
(22) Date of filing: 25.04.2023
(51) Int. Cl.: G06F 9/54

(54) **EVENT PROCESSING METHOD AND APPARATUS APPLIED TO IOT DEVICE**

(30) Priority: 07.05.2022 CN 202210493654
(71) Applicant: Alipay (Hangzhou) Information Technology Co., Ltd., Hangzhou, Zhejiang 310000 (CN)
(72) Inventor: ZHAI, Yifan, Hangzhou, Zhejiang 310000 (CN); MA, Jing, Hangzhou, Zhejiang 310000 (CN); YAO, Jiayi, Hangzhou, Zhejiang 310000 (CN); JIN, He, Hangzhou, Zhejiang 310000 (CN); MU, Wenwen, Hangzhou, Zhejiang 310000 (CN); PAN, Yunyi, Hangzhou, Zhejiang 310000 (CN)
(74) Representative: Winter, Brandl - Partnerschaft mbB
(86) International application number: PCT/CN2023/090607
(87) International publication number: WO 2023/216872

(57) **Abstract**

Embodiments of this specification provide an event processing method and apparatus that are applied to an IoT device. The event processing method applied to an IoT device includes: obtaining call data that are of a service event and that are transferred by a subprogram through a call interface; querying, in a shared container, an executive identifier corresponding to an interface type of the call interface, where the executive identifier is registered in the shared container when a device client is configured with a corresponding executive; if the executive identifier is obtained through querying, intercepting the service event, and writing the call data into the shared container; and reading event data matching the executive in the call data, and transmitting the event data to the device client, so that the device client calls at least one target application to perform event processing.

## Description

### TECHNICAL FIELD

This disclosure relates to the field of data processing technologies, and in particular, to an event processing method and apparatus applied to an IoT device.

### BACKGROUND

With development of Internet technologies and popularization of mobile terminals, more services start to extend to an online scenario, and application platform software that can be installed with a plurality of application subprograms occurs, to prevent a user from installing different types of applications on the mobile terminal, and instead, implement service processing by using an application subprogram installed in the application platform software. In addition, the application subprogram can fully use sufficient user traffic of the application platform software, to provide assistance in service improvement of the application subprogram.

### SUMMARY

One or more embodiments of this specification provide an event processing method applied to an IoT device. The event processing method applied to an IoT device includes: obtaining call data that are of a service event and that are transferred by a subprogram through a call interface; querying, in a shared container, an executive identifier corresponding to an interface type of the call interface, where the executive identifier is registered in the shared container when a device client is configured with a corresponding executive; upon determining that the executive identifier is obtained through querying, intercepting the service event, and writing the call data into the shared container; and reading event data matching the executive in the call data, and transmitting the event data to the device client, so that the device client calls at least one target application to perform event processing.

One or more embodiments of this specification provide an event processing apparatus applied to an IoT device, including: a call data obtaining module, configured to obtain call data that are of a service event and that are transferred by a subprogram through a call interface; an executive identifier querying module, configured to query, in a shared container, an executive identifier corresponding to an interface type of the call interface, where the executive identifier is registered in the shared container when a device client is configured with a corresponding executive; a call data write module, configured to run upon determining that the executive identifier is obtained through querying, where the call data write module is configured to: intercept the service event, and write the call data into the shared container; and an event data transmission module, configured to: read event data matching the executive in the call data, and transmit the event data to the device client, so that the device client calls at least one target application to perform event processing.

One or more embodiments of this specification provide an event processing device applied to an IoT device, including a processor, and a storage, configured to store computer-executable instructions. When the computer-executable instructions are executed, the processor is enabled to: obtaining call data that are of a service event and that are transferred by a subprogram through a call interface; querying, in a shared container, an executive identifier corresponding to an interface type of the call interface, where the executive identifier is registered in the shared container when a device client is configured with a corresponding executive; upon determining that the executive identifier is obtained through querying, intercepting the service event, and writing the call data into the shared container; and reading event data matching the executive in the call data, and transmitting the event data to the device client, so that the device client calls at least one target application to perform event processing.

One or more embodiments of this specification provide a storage medium, configured to store computer-executable instructions. When the computer-executable instructions are executed by a processor, the following procedure is implemented: obtaining call data that are of a service event and that are transferred by a subprogram through a call interface; querying, in a shared container, an executive identifier corresponding to an interface type of the call interface, where the executive identifier is registered in the shared container when a device client is configured with a corresponding executive; upon determining that the executive identifier is obtained through querying, intercepting the service event, and writing the call data into the shared container; and reading event data matching the executive in the call data, and transmitting the event data to the device client, so that the device client calls at least one target application to perform event processing.

### BRIEF DESCRIPTION OF DRAWINGS

To describe the technical solutions in one or more embodiments of this specification more clearly, the following briefly describes the accompanying drawings needed for describing the embodiments. Clearly, the accompanying drawings in the following descriptions show merely some embodiments recorded in this specification, and a person of ordinary skill in the art can still derive other drawings from these accompanying drawings without creative efforts.
FIG. 1 is a flowchart illustrating an event processing method applied to an IoT device, according to one or more embodiments of this specification;
FIG. 2 is a schematic processing diagram illustrating an event processing method applied to an IoT device, according to one or more embodiments of this specification;
FIG. 3 is a processing flowchart illustrating an event processing method applied to an IoT device in a ticket purchase navigation scenario, according to one or more embodiments of this specification;
FIG. 4 is a processing flowchart illustrating an event processing method applied to an IoT device in a vehicle-mounted IoT device scenario, according to one or more embodiments of this specification;
FIG. 5 is a schematic diagram illustrating an event processing apparatus applied to an IoT device, according to one or more embodiments of this specification; and
FIG. 6 is a schematic structural diagram illustrating an event processing device applied to an IoT device, according to one or more embodiments of this specification.

### DESCRIPTION OF EMBODIMENTS

To make a person skilled in the art understand the technical solutions in one or more embodiments of this specification better, the following clearly and comprehensively describes the technical solutions in the one or more embodiments of this specification with reference to the accompanying drawings in the one or more embodiments of this specification. Clearly, the described embodiments are merely some but not all of the embodiments of this specification. All other embodiments obtained by a person of ordinary skill in the art based on the one or more embodiments of this specification without creative efforts shall fall within the protection scope of this disclosure.

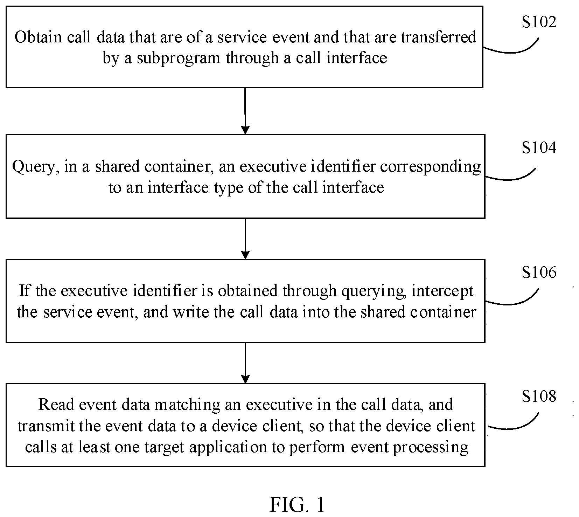

An embodiment of an event processing method applied to an IoT device provided in this specification is as follows: As shown in FIG. 1, the event processing method applied to an IoT device provided in this embodiment is applied to a service client deployed on the IoT device, and specifically includes step S102 to step S108.

Step S102: Obtain call data that are of a service event and that are transferred by a subprogram through a call interface.

In actual applications, when a subprogram in a third-party application running on a terminal device runs, the subprogram can only interact with the third-party application, use an application mechanism of the third-party application, and cannot be linked with a device application running on the terminal device, affecting flexibility of a device application configured on the terminal device. If data of the subprogram are transmitted to the IoT device in an existing inter-process communication (IPC) manner, a device provider of the IoT device needs to integrate a software development kit (SDK) of the subprogram and extend the SDK into a device client on the IoT device. Access costs are relatively high and convenience is low.

In the event processing method applied to an IoT device provided in this embodiment, an intermediate client, namely, the service client deployed on the IoT device transmits call data of a subprogram running based on the service client to the IoT device configured with the service client. In addition, to ensure that the IoT device can perform event processing based on the call data of the subprogram, and avoid affecting user experience because the call data of the subprogram are transmitted to the IoT device but the IoT device cannot perform event processing based on the call data, after obtaining the call data transferred by the subprogram, the service client first determines whether the IoT device has a capability of performing event processing based on the call data; and if yes, transmits data of the service event in the call data to the device client, to perform event processing by using at least one target application of the device client. In this way, data of the subprogram are transmitted to the IoT device, to perform event processing by using a device application on the IoT device, and improve flexibility of the device application on the IoT device.

The IoT device in this embodiment includes at least one of the following: an in-vehicle infotainment terminal mounted on a vehicle, an external terminal device of the vehicle, a smart speaker, a vending machine, an autonomous radio, an interactive advertisement screen, a POS device, and a smart home appliance product such as a smart TV or a smart refrigerator. Optionally, the IoT device includes a vehicle-mounted IoT device. The vehicle-mounted IoT device includes an in-vehicle infotainment terminal configured for the vehicle and/or the external terminal device of the vehicle. The IoT device is provided by a device provider. The device provider includes a producer of the terminal device, a seller of the terminal device, and/or a service operation and maintenance party of the terminal device. The subprogram (mini-program) is an application package or an application component mounted on an application platform or loaded and installed on an application platform. From a service perspective, the subprogram has a capability of independently providing a self-closed-loop service, for example, is a sub-application that runs in an application and that provides a self-closed-loop capability of a vehicle-related service or an order service.

The device client and the service client are deployed on the IoT device. The service client is a running framework or a running engine that is provided for the IoT device, and the service client is configured on the IoT device, to implement access to the subprogram on the IoT device, specifically including running a subprogram that provides a corresponding service on the IoT device. In other words, the service client is configured to run the subprogram; and the device client is a set of system applications on which running of the terminal device depends. Optionally, the device client is configured with an access entry to the subprogram. When detecting that the configured access entry to the subprogram is triggered, the device client calls a service interface provided by the service client deployed on the IoT device, and transfers an access request for the subprogram, so that the service client loads the subprogram based on the access request. Alternatively, the service client is configured with an access entry to the subprogram.

In specific implementations, the device provider of the IoT device performs device registration by using a server (a server corresponding to the service client). After device registration is performed, the service client is deployed on the IoT device, to access the subprogram by using the service client. Specifically, the service client can independently run, as an application, on the IoT device; or can run, as a tool kit, in a host application deployed on the IoT device (an application registered by the device provider by using the server). When an access entry that is of the subprogram and that is configured by using the host application is triggered, the service client is called to load the subprogram. The server is configured to cooperate with the service client deployed on the IoT device, to perform device login processing and subprogram access processing for the IoT device.

After the device provider performs device registration by using the server, the server stores device information of the IoT device. In a use process of the IoT device, use of the service client on the IoT device needs to be activated, to ensure that the IoT device has permission to access the subprogram by using the service client. Based on this, in an optional implementation provided in this embodiment, the IoT device is activated in the following manner: To-be-verified data are collected based on a device activation instruction submitted by the device client; the to-be-verified data are uploaded to the server, to verify whether the to-be-verified data are consistent with device information entered when the device provider of the IoT device performs device registration on the IoT device; and a verification result delivered by the server is received, and the verification result is returned to the device client by using a callback function.

Specifically, the device client is deployed on the IoT device. In a device activation process of the IoT device, after the device activation instruction submitted by the device client is obtained, the entered to-be-verified data are collected, and the collected to-be-verified data are uploaded to the server. The server compares the to-be-verified data uploaded by the service client and pre-stored device data of the device provider, and returns the verification result to the device client. If the device client receives a verification result that is delivered by the server and that indicates that verification succeeds, the device client stores the to-be-verified data in a shared container as the device information of the IoT device. If the device client receives a verification result that is delivered by the server and that indicates that verification fails, a verification failure prompt is displayed.

The to-be-verified data includes a product identifier corresponding to the IoT device, a device identifier corresponding to the IoT device, and/or an application identifier entered by the device provider (an application identifier of the host application).

The vehicle-mounted IoT device is used as an example to describe the process of device activation. The vehicle-mounted IoT device is configured with a device client and a service client at delivery based on registration performed by the vehicle provider in the server. When a vehicle owner uses the vehicle-mounted IoT device for the first time, the vehicle-mounted IoT device needs to be activated. The vehicle owner submits the device activation instruction by using the device client configured on the vehicle-mounted IoT device. The device client collects, based on the device activation instruction, to-be-verified data including data such as a device identifier, and uploads the to-be-verified data to the server through IPC provided by the server, so that after the to-be-verified data are received, the server verifies whether the to-be-verified data match device information stored when the vehicle provider performs device registration in the server, and sends a matching result to the device client through IPC. If the verification result indicating that verification succeeds is received, the service client stores the to-be-verified data as the device information of the vehicle-mounted IoT device; or if the verification result indicating that verification fails is received, the verification failure prompt is displayed by using the vehicle-mounted IoT device.

In a subprogram access process, if another service (for example, a ticket service involves a navigation service) is involved, another application needs to be called to cooperate with the subprogram to complete the service. Therefore, another service needs to be called. In this embodiment, if the subprogram needs to call another application to cooperate to complete the service, the subprogram transfers the call data to the service client.

In specific implementations, in a process in which a user accesses the subprogram, the user submits an event processing instruction for the service event by using the subprogram, and the subprogram calls another service to perform event processing. However, in a process of calling another service to perform event processing, the call data need to be transferred to enable a corresponding service to perform event processing. In an optional implementation provided in this embodiment, the subprogram determines the call data of the service event in the following manner: Service processing is performed on service data entered by the user by using the subprogram, to obtain a service processing result. If the event processing instruction submitted by the user for the service event by using the subprogram is received, the call data are determined from the service processing result based on the event processing instruction.

Specifically, the user enters the service data or a service instruction by using the subprogram to perform service processing, and obtains the service processing result. When the service processing result is displayed to the user, an event access entry to an optional service event can be displayed based on a configuration of the subprogram. If an access instruction entered the user for an event access entry to any service event in the displayed optional service event by using the subprogram is received, the call data for event processing are determined from the service processing result based on the service event, and the call data are transferred by calling a call interface corresponding to the service event.

For example, the user accesses a ticketing subprogram through an access entry to the ticketing subprogram configured in the device client on the vehicle-mounted IoT device. When detecting that the access entry to the ticketing subprogram is triggered, the device client transfers an access instruction for the ticketing subprogram to a service interface provided by a service container (the service client) configured on the vehicle-mounted IoT device, and the service container loads the ticketing subprogram based on the access instruction. After the user purchases a ticket by using the ticketing subprogram, purchased ticket information includes related information such as location data and a ticket time. When the ticket information is displayed to the user, to improve a degree of perception of the user for a service provided by the subprogram, an access entry to a navigation service is displayed to the user. When detecting that the access entry to the navigation service is triggered, the subprogram determines the location data and the ticket time as call data for navigation event processing, and transfers the location data and the ticket time to the service container through a navigation interface.

Step S104: Query, in the shared container, an executive identifier corresponding to an interface type of the call interface.

The shared container includes a storage container capable of performing data exchange and data sharing between processes, for example, ContentProvider (content provider).

To improve flexibility of the target application configured in the device client and improve usage of the target application, in this embodiment, after the call data that are of the service event and that are transferred by the subprogram through the call interface are obtained, the call data are transferred to the device client, so that the device client calls a plurality of target applications to perform event processing, to improve usage of the target application.

Based on this, to avoid affecting access experience of the subprogram because the IoT device or the device client on the IoT device does not have an event processing capability and consequently, event processing cannot be performed after the service client transmits the call data to the device client, and event processing fails because the third-party application is not called to perform event processing, thereby affecting access experience of the subprogram, after the call data that are of the service event and that are transferred by the subprogram through the call interface are obtained, the executive identifier corresponding to the interface type of the call interface is queried in the shared container. The executive identifier is registered in the shared container when the device client configures a corresponding executive. In an optional implementation provided in this embodiment, the executive identifier is registered in the following manner: Configuration information that is used for configuring an executive corresponding to the executive identifier and that is transferred by the device client is obtained.

The executive identifier is written into the shared container based on obtaining of the configuration information.

Specifically, after the executive is configured, the device client transfers the executive identifier to the service client through the service interface provided by the service client. After obtaining the configuration information that carries the executive identifier, the service client correspondingly stores the executive identifier and the device information of the IoT device in the shared container.

In specific implementations, the call data that are of the service event and that are transferred through the call interface are written into the shared container. After it is detected that the call data are written into the shared container, the executive identifier corresponding to the interface type of the call interface is queried in the shared container.

For example, the subprogram transfers the call data of the service event to ContentProvider through the call interface. When ContentObserver (content observer) detects that the call data are written into ContentProvider, the service client reads the call data based on a detection result, and queries, in ContentProvider, whether the executive identifier corresponding to the interface type of the call interface exists, that is, queries whether the device client has a capability of performing event processing based on the call data.

If the executive identifier corresponding to the interface type of the call interface is obtained through querying in the shared container, the service event is intercepted, that is, the call data are intercepted, and the call information is written into the shared container. In an optional implementation provided in this embodiment, if the executive identifier is not obtained through querying, the following operations are performed: A target service application is determined based on the service event, and event processing of the service event is performed based on the call data in the target service application. The at least one target application is configured with a service interface of the service client. The target service application is a third-party application configured for the IoT device.

Specifically, the executive identifier corresponding to the interface type of the call interface is queried in the shared container. If the executive identifier is obtained through querying, it indicates that the device client has a processing capability of performing event processing, and the service event is intercepted; or if the executive identifier is not obtained through querying, event processing is performed based on a prior event processing procedure. To be specific, the target service application is determined based on the service event, and the device client calls the target service application to perform event processing of the service event based on the call data.

The above-mentioned example is still used. Because the ticketing subprogram cannot provide the navigation service, a navigation interface of the service client is called, and a ticket time and location data of a ticketing institution for executing the navigation service are transferred to ContentProvider. After ContentObserver detects that the ticket time and the location data are written into ContentProvider, the service client queries a navigation identifier in ContentProvider. If no navigation identifier is obtained through querying, a third-party navigation application configured on the vehicle-mounted IoT device or a navigation application integrated into the service client is called to perform navigation to the ticketing institution. If a navigation identifier is obtained through querying, the ticket information and the location data of the ticketing institution are intercepted.

Step S106: If the executive identifier is obtained through querying, intercept the service event, and write the call data into the shared container.

In specific implementations, if the executive identifier corresponding to the interface type of the call interface is obtained through querying in the shared container, the service event is intercepted, to be specific, that the service client calls the third-party application (the target service application) to perform event processing is intercepted, and the call data in the shared container and the executive identifier are correspondingly stored.

To improve call data management validity, the call data and the executive identifier are correspondingly written into the shared container. In an optional implementation provided in this embodiment, the call data are written into the shared container in the following manner: A key value pair is constructed by using the executive identifier as a primary key and using the call data as a key value; and the key value pair is written into the shared container.

Specifically, the executive identifier and the call data are written into the shared container in a form of the key value pair.

For example, after the ticket information and the location data of the ticketing institution are intercepted, the key value pair is constructed by using the navigation identifier (an application identifier of a navigation application) as a primary key and using the ticket information and the location data of the ticket institution as a key value, and the key value pair is written into ContentProvider.

Step S108: Read event data matching the executive in the call data, and transmit the event data to the device client, so that the device client calls at least one target application to perform event processing.

The device client is deployed on the IoT device. The target application includes a device application that is configured on the IoT device at delivery and that is configured with the service interface of the service client. In addition, a third-party application that is not configured at delivery but is configured with the service interface of the service client can be further included. The target application is configured with the service interface of the service client.

In specific implementations, to improve data transmission efficiency and improve event processing efficiency, and avoid affecting processing efficiency when other data in the call data are transmitted to the device client, and consequently, data filtering needs to be performed in an event processing process in which the device client executes the service event based on the target application, in this embodiment, the event data matching the executive in the call data are read, and then the event data are transmitted to the device client, so that the device client performs event processing based on a navigation application that is deployed with the service interface of the service client.

In an optional implementation provided in this embodiment, a navigation event is used as an example. When the event data matching the executive in the call data are read and transmitted to the device client, location data matching a navigation executive in the call data are read, and the location data are transmitted to a device client on the IoT device. Further, in a process in which the device client calls at least one target application to perform event processing, the following operations are performed: loading a navigation application configured by the device client, and transmitting the location data to the navigation application, so that the navigation application performs navigation processing by using device location data of the IoT device as start location data and using the location data as end location data. The navigation application is configured with the service interface of the service client.

Specifically, when the service event is a navigation event, the location data matching the navigation executive in the call data are read and sent to the device client. After receiving the location data, the device client loads the navigation application that is configured by the device client and that has been configured with the service interface of the service client, to collect the device location data of the IoT device, and performs navigation processing based on the device location data and the location data.

For example, when ContentObserver detects that ContentProvider writes the key value pair in which the navigation identifier is a primary key and the ticket information and the location data of the ticketing institution are a key value, event data in the key value pair are read, and the event data are transmitted to the device client, so that the device client loads a corresponding navigation service based on the navigation identifier, and performs navigation processing on the location data of the ticketing institution based on the navigation service.

After receiving the event data, the device client can call the plurality of target applications to perform event processing. In this embodiment, to avoid data missing caused when the device client performs, after the event data matching the executive are read from the call data and then transmitted to the device client, event processing based on a target application that does not execute the executive, after the call data are written into the shared container, the call data are transmitted to the device client, so that the device client calls the at least one target application to perform event processing.

It is worthwhile to note that, in a process of transmitting the call data or the event data to the device client, data transmission from the service client to the device client is performed by using the shared container. To be specific, the call data or the event data are transmitted from a process corresponding to the service client to a process corresponding to the device client by using the shared container.

In this embodiment, after the event data are transmitted to the device client, the device client can perform event processing based on the plurality of target applications. In an optional implementation provided in this embodiment, the device client calls at least one target application in the following manner, to perform event processing: determining a first target application and a second target application that load the event data; and
inputting the event data into the first target application and the second target application, to load the event data based on an application attribute of the first target application, and load the event data based on an application attribute of the second target application.

For example, in a process in which the device client on the vehicle-mounted IoT device calls the first target application and the second target application to perform event processing, when the location data are obtained, the device client calls the navigation service and a weather service that are configured by the device client, to transfer the location data to the navigation service, so that the navigation service performs navigation processing based on the location data and terminal location data of the in-vehicle infotainment terminal, and transmits the location data to the weather service, and the weather service broadcasts the weather at a location corresponding to the location data.

It is worthwhile to note that, that two target applications are called to perform event processing is merely used as an example above to describe the process in which the device client performs event processing. Alternatively, three or more target applications are called to perform event processing, because the device client can perform event processing based on any target application after obtaining the event data. A process of calling three or more target applications to perform event processing is similar to that in a manner of calling the two target applications to perform event processing. Details are omitted here for simplicity in this embodiment.

It is worthwhile to further note that the device client can configure at least one target application for the executive. When the event data matching the executive or call data associated with the executive identifier (key value pair) of the executive are obtained, a plurality of target applications configured for the executive are read, and event processing of each target application is performed based on an application attribute and event data (or call data) of each target application.

After transmitting the event data to the device client, the service client synchronizes a data transmission result to the subprogram by using the callback function, to improve a degree of perception of the subprogram for data transmission.

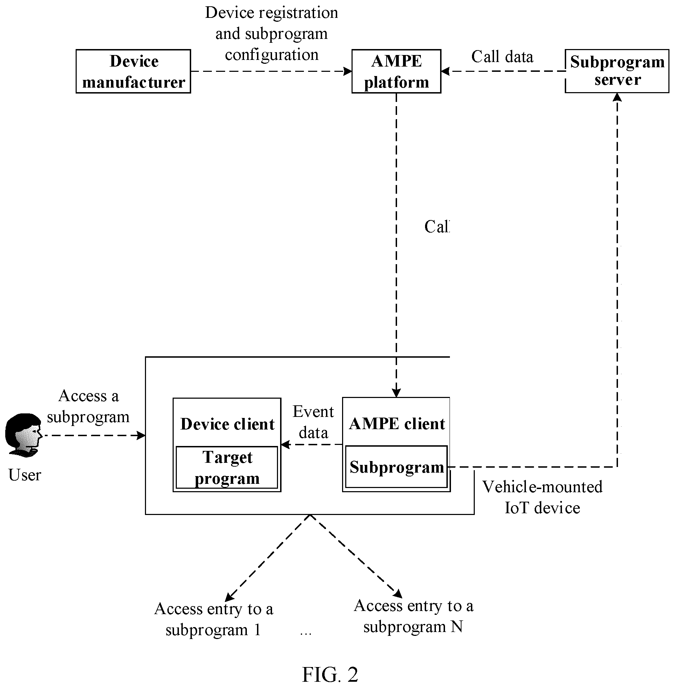

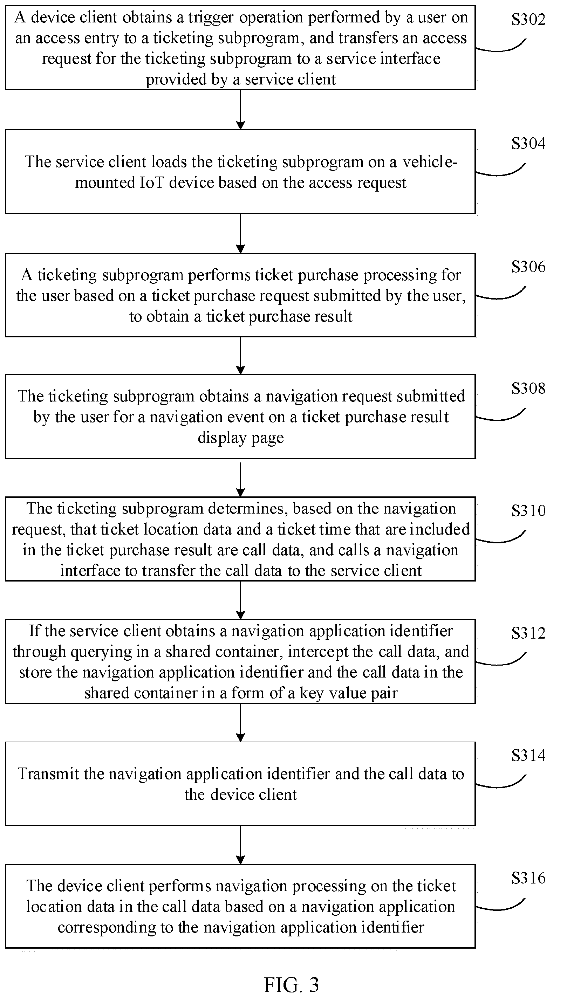

The following further describes, with reference to FIG. 2, an event processing method applied to an IoT device provided in the embodiments by using an example in which the event processing method applied to an IoT device provided in the embodiments is applied to a ticket purchase navigation scenario. As shown in FIG. 3, the event processing method applied to an IoT device in the ticket purchase navigation scenario specifically includes step S302 to step S316.

As shown in FIG. 2, a device manufacturer that provides the vehicle-mounted IoT device registers the vehicle-mounted IoT device on an Alipay mini-program engine (AMPE) platform, and selects a subprogram that is open to the vehicle-mounted IoT device. The subprogram that can be selected by the device manufacturer is a subprogram in a subprogram pool that is registered by a subprogram provider on the AMPE platform. After the device manufacturer selects the subprogram that is open to the vehicle-mounted IoT device, an AMPE client (service client) is integrated based on the subprogram selected by the device manufacturer, so that the device manufacturer configures the AMPE client on the vehicle-mounted IoT device when configuring the vehicle-mounted IoT device, and a user accesses the subprogram through the AMPE client configured on the vehicle-mounted IoT device.

It is worthwhile to note that the AMPE client is configured in a third-party application configured in a device client on the vehicle-mounted IoT device. Specifically, the third-party application is configured with an access entry to the subprogram.

In a process in which the user accesses the subprogram by using the vehicle-mounted IoT device, the access entry to the subprogram is first triggered by using the device client configured on the vehicle-mounted IoT device. When detecting that the access entry to the subprogram is triggered, the device client transfers an access instruction for the subprogram to a service interface provided by the AMPE client. After receiving the access instruction for the subprogram, the AMPE client loads the subprogram on the vehicle-mounted IoT device. After the user obtains a service processing result by performing service processing by accessing the subprogram, the user submits an event processing instruction for a service event by using the subprogram. After determining call data in the service processing result based on the event processing instruction, the subprogram transfers the call data to the AMPE client based on a call interface of an event type corresponding to the service event. After receiving the call data, the AMPE client queries an executive identifier corresponding to the event type in a shared container. If the executive identifier is obtained through querying, the call data are intercepted, the call data and the executive identifier are written into the shared container, and event data matching an executive corresponding to the executive identifier in the call data are read and transmitted to the device client. After receiving the event data, the device client performs event processing based on a target application corresponding to the executive identifier included in the event data.

Step S302: The device client obtains a trigger operation performed by the user on an access entry to a ticketing subprogram, and transfers an access request for the ticketing subprogram to a service interface provided by the service client.

Step S304: The service client loads the ticketing subprogram on the vehicle-mounted IoT device based on the access request.

Step S306: The ticketing subprogram performs ticket purchase processing for the user based on a ticket purchase request submitted by the user, to obtain a ticket purchase result.

Step S308: The ticketing subprogram obtains a navigation request submitted by the user for a navigation event on a ticket purchase result display page.

Step S310: The ticketing subprogram determines, based on the navigation request, that ticket location data and a ticket time that are included in the ticket purchase result are call data, and calls a navigation interface to transfer the call data to the service client.

Step S312: If the service client obtains a navigation application identifier through querying in the shared container, intercept the call data, and store the navigation application identifier and the call data in the shared container in a form of a key value pair.

If the service client does not obtain a navigation application identifier through querying in the shared container, navigation service processing is performed based on a navigation application integrated in the service client.

Step S314: Transmit the navigation application identifier and the call data to the device client.

Step S316: The device client performs navigation processing on the ticket location data in the call data based on a navigation application corresponding to the navigation application identifier.

The navigation application is an application configured in the device client.

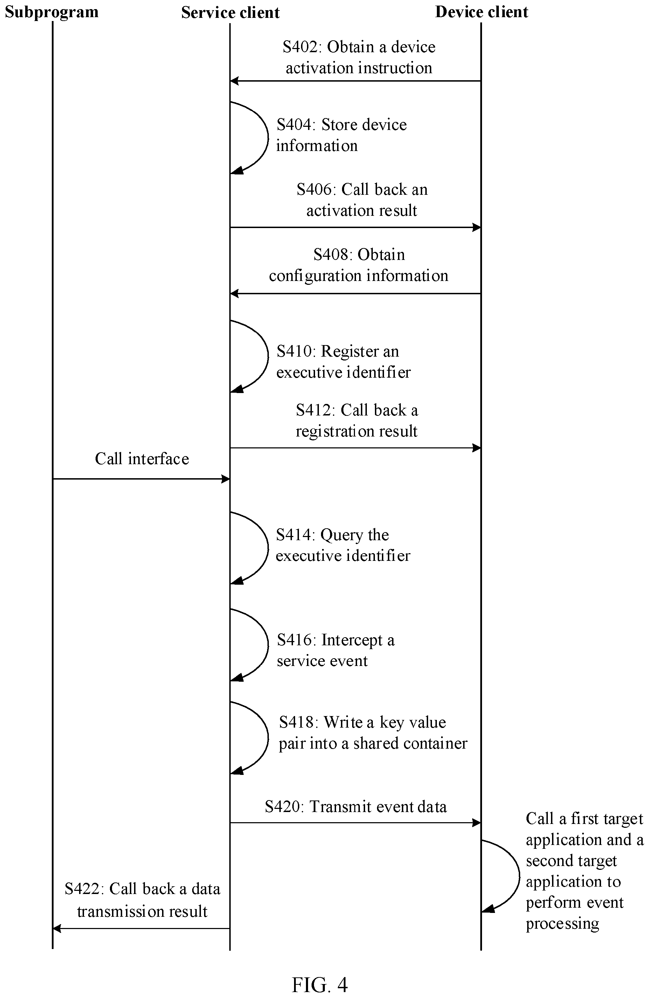

The following further describes an event processing method applied to an IoT device provided in the embodiments by using an example in which the event processing method applied to an IoT device provided in the embodiments is applied to a vehicle-mounted IoT device scenario. As shown in FIG. 4, the event processing method applied to an IoT device in the vehicle-mounted IoT device scenario specifically includes step S402 to step S422.

Step S402: Obtain to-be-verified data based on a device activation instruction submitted by a device client deployed on the vehicle-mounted IoT device, and send the to-be-verified data to a server, to perform device verification.

Step S404: Store to-be-verified data in a shared container as device information of the vehicle-mounted IoT device based on a verification success result delivered by the server.

Step S406: Perform a callback function, to return, to the device client, an activation result indicating that activation succeeds.

Step S408: Obtain configuration information that is used for configuring an executive corresponding to an executive identifier and that is transferred by the device client by calling a service interface configured by a service client.

Step S410: Write the executive identifier into the shared container based on the configuration information, to complete registration of the executive.

Step S412: After the executive identifier is written into the shared container, perform the callback function, to return, to the device client, a registration result indicating that registration succeeds.

Step S414: If it is detected that call data that are of a service event and that are transferred by a subprogram through a call interface are written into the shared container, query, in the shared container, an executive identifier corresponding to an interface type of the call interface.

Step S416: Intercept the service event if the executive identifier is obtained through querying.

Step S418: Construct a key value pair based on the executive identifier and the call data, and write the key value pair into the shared container.

Step S420: Read event data matching the executive in the call data, and transmit the event data to the device client based on the shared container, so that the device client performs event processing based on a first target application and a second target application.

In an execution process, step S420 can be further replaced with transmitting the call data to the device client based on the shared container.

Step S422: Perform the callback function, to return a data transmission result to the subprogram.

In conclusion, in the event processing method applied to an IoT device provided in this embodiment, the shared container is configured, to implement data transmission between the service client and the device client, that is, implement data transmission between a process corresponding to the service client and a process corresponding to the device client. In addition, after receiving transmitted data, the device client can perform event processing by using a plurality of target applications that are configured with the service interface of the service client. In this way, a linkage between a mini program and a device application configured on the IoT device is implemented, a limitation of one-to-one data transmission of the subprogram is overcome, a service degree of perception of a device provider of the IoT device is improved, and flexibility of the device application is improved.

An embodiment of an event processing apparatus applied to an IoT device provided in this specification is as follows: In the above-mentioned embodiment, the event processing method applied to an IoT device is provided, and correspondingly, the event processing apparatus applied to an IoT device is further provided. The following provides descriptions with reference to the accompanying drawings.

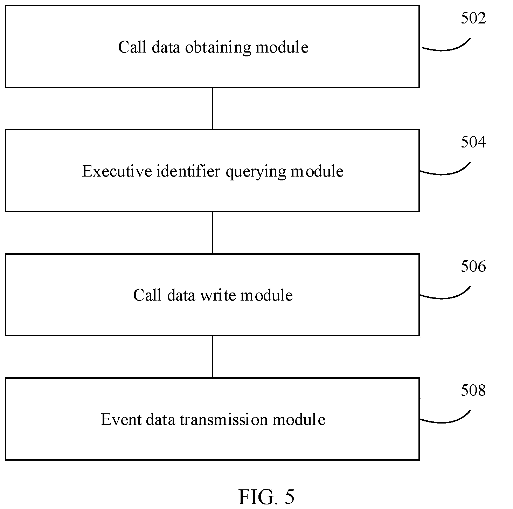

FIG. 5 is a schematic diagram illustrating an event processing apparatus applied to an IoT device, according to an embodiment.

The apparatus embodiment corresponds to the method embodiment, and therefore is described briefly. For related parts, references can be made to the corresponding description of the method embodiment provided above. The apparatus embodiment described below is merely an example.

This embodiment provides the event processing apparatus applied to an IoT device, including: a call data obtaining module 502, configured to obtain call data that are of a service event and that are transferred by a subprogram through a call interface; an executive identifier querying module 504, configured to query, in a shared container, an executive identifier corresponding to an interface type of the call interface, where the executive identifier is registered in the shared container when a device client is configured with a corresponding executive; a call data write module 506, configured to run if the executive identifier is obtained through querying, where the call data write module 506 is configured to: intercept the service event, and write the call data into the shared container; and an event data transmission module 508, configured to: read event data matching the executive in the call data, and transmit the event data to the device client, so that the device client calls at least one target application to perform event processing.

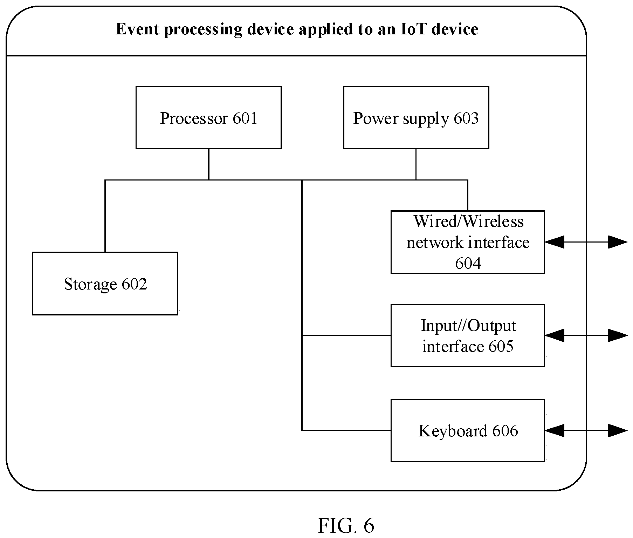

An embodiment of an event processing device applied to an IoT device provided in this specification is as follows. Corresponding to the event processing method applied to an IoT device described above, based on the same technical concept, one or more embodiments of this specification further provide an event processing device applied to an IoT device. The event processing device applied to an IoT device is configured to perform the event processing method applied to an IoT device provided above. FIG. 6 is a schematic structural diagram illustrating an event processing device applied to an IoT device, according to one or more embodiments of this specification.

The event processing device applied to an IoT device provided in this embodiment includes the following: As shown in FIG. 6, the event processing device applied to an IoT device can differ greatly due to different configurations or performance, and can include one or more processors 601 and a storage 602. The storage 602 can store one or more applications or data. The storage 602 can be a transitory storage or persistent storage. The application program stored in the storage 602 can include one or more modules (not shown in the figure), and each module can include a series of computer-executable instructions in the event processing device applied to an IoT device. Further, the processor 601 can be configured to communicate with the storage 602, to execute a series of computer-executable instructions in the storage 602 on the event processing device applied to an IoT device. The event processing device applied to an IoT device can further include one or more power supplies 603, one or more wired or wireless network interfaces 604, one or more input//output interfaces 605, one or more keyboards 606, etc.

In a specific embodiment, the event processing device applied to an IoT device includes a storage and one or more programs. The one or more programs are stored in the storage. The one or more programs can include one or more modules. Each module can include a series of computer-executable instructions in the event processing device applied to an IoT device. The one or more processors are configured to execute the one or more programs, including performing the following computer-executable instructions: obtaining call data that are of a service event and that are transferred by a subprogram through a call interface; querying, in a shared container, an executive identifier corresponding to an interface type of the call interface, where the executive identifier is registered in the shared container when a device client is configured with a corresponding executive; if the executive identifier is obtained through querying, intercepting the service event, and writing the call data into the shared container; and reading event data matching the executive in the call data, and transmitting the event data to the device client, so that the device client calls at least one target application to perform event processing.

An embodiment of a storage medium provided in this specification is as follows: Corresponding to the event processing method applied to an IoT device described above, based on the same technical concept, one or more embodiments of this specification further provide a storage medium.

The storage medium provided in this embodiment is configured to store computer-executable instructions. When the computer-executable instructions are executed by a processor, the following procedure is implemented: obtaining call data that are of a service event and that are transferred by a subprogram through a call interface;
querying, in a shared container, an executive identifier corresponding to an interface type of the call interface, where the executive identifier is registered in the shared container when a device client is configured with a corresponding executive; if the executive identifier is obtained through querying, intercepting the service event, and writing the call data into the shared container; and reading event data matching the executive in the call data, and transmitting the event data to the device client, so that the device client calls at least one target application to perform event processing.

It is worthwhile to note that the embodiment of the storage medium in this specification and the embodiment of the event processing method applied to an IoT device in this specification are based on the same inventive concept. Therefore, for specific implementations of the embodiment, references can be made to the above-mentioned implementation of the corresponding method, and repeated parts are omitted for simplicity.

Some specific embodiments of this specification are described above. Other embodiments fall within the scope of the appended claims. In some cases, actions or steps described in the claims can be performed in a sequence different from that in the embodiments and desired results can still be achieved. In addition, the process depicted in the accompanying drawings does not necessarily need a particular sequence to achieve the desired results. In some implementations, multi-tasking and parallel processing are feasible or may be advantageous.

In the 1990s, whether a technical improvement is a hardware improvement (for example, an improvement to a circuit structure, such as a diode, a transistor, or a switch) or a software improvement (an improvement to a method procedure) can be clearly distinguished. However, as technologies develop, current improvements to many method procedures can be considered as direct improvements to hardware circuit structures. Almost all designers program an improved method procedure into a hardware circuit, to obtain a corresponding hardware circuit structure. Therefore, a method procedure can be improved by using a hardware entity module. For example, a programmable logic device (PLD) (for example, a field programmable gate array (FPGA)) is such an integrated circuit, and a logical function of the programmable logic device is determined by a user through device programming. The designer independently performs programming to "integrate" a digital system to a PLD without requesting a chip manufacturer to design and manufacture an application-specific integrated circuit chip. In addition, at present, instead of manually manufacturing an integrated circuit chip, this type of programming is mostly implemented by using "logic compiler" software. The programming is similar to a software compiler used to develop and write a program. Original code needs to be written in a particular programming language for compilation. The language is referred to as a hardware description language (HDL). There are many HDLs, such as the Advanced Boolean Expression Language (ABEL), the Altera Hardware Description Language (AHDL), Confluence, the Cornell University Programming Language (CUPL), HDCal, the Java Hardware Description Language (JHDL), Lava, Lola, MyHDL, PALASM, and the Ruby Hardware Description Language (RHDL). The very-high-speed integrated circuit hardware description language (VHDL) and Verilog are most commonly used. It should also be clear to a person skilled in the art that a hardware circuit for implementing a logical method procedure can be easily obtained by performing slight logic programming on the method procedure by using the above-mentioned several hardware description languages and programming the method procedure into an integrated circuit.

A controller can be implemented by using any appropriate method. For example, the controller can be a microprocessor or a processor, or a computer readable medium that stores computer-readable program code (such as software or firmware) that can be executed by the microprocessor or the processor, a logic gate, a switch, an application-specific integrated circuit (ASIC), a programmable logic controller, or a built-in microprocessor. Examples of the controller include but are not limited to the following microprocessors: ARC 625D, Atmel AT91SAM, Microchip PIC18F26K20, and Silicone Labs C8051F320. A storage controller can also be implemented as a part of the control logic of the storage. A person skilled in the art also knows that in addition to implementing the controller by using only the computer-readable program code, logic programming can be performed on method steps to enable the controller to implement the same function in a form of a logic gate, a switch, an application specific integrated circuit, a programmable logic controller, or an embedded microcontroller. Therefore, the controller can be considered as a hardware component, and an apparatus configured to implement various functions in the controller can also be considered as a structure in the hardware component. Alternatively, an apparatus configured to implement various functions can even be considered as both a software module implementing the method and a structure in the hardware component.

The systems, apparatuses, modules, or units described in the above-mentioned embodiments can be specifically implemented by a computer chip or an entity, or can be implemented by a product having a certain function. A typical implementation device is a computer. Specifically, the computer can be, for example, a personal computer, a laptop computer, a cellular phone, a camera phone, a smartphone, a personal digital assistant, a media player, a navigation device, an email device, a game console, a tablet computer, a wearable device, or a combination of any of these devices.

For ease of description, the above-mentioned apparatus is described by dividing functions into various units. Certainly, when the embodiments of this specification are implemented, functions of the units can be implemented in one or more pieces of software and/or hardware.

A person skilled in the art should understand that one or more embodiments of this specification can be provided as a method, a system, or a computer program product. Therefore, one or more embodiments of this specification can use a form of hardware only embodiments, software only embodiments, or embodiments with a combination of software and hardware. In addition, a form of a computer program product that is implemented on one or more computer-usable storage media (including but not limited to a disk storage, a CD-ROM, an optical storage, etc.) that include computer-usable program code can be used in this specification.

This specification is described with reference to the flowcharts and/or block diagrams of the method, the device (system), and the computer program product according to the embodiments of this specification. It should be understood that computer program instructions can be used to implement each procedure and/or each block in the flowcharts and/or the block diagrams and a combination of a procedure and/or a block in the flowcharts and/or the block diagrams. These computer program instructions can be provided for a general-purpose computer, a dedicated computer, an embedded processor, or a processor of another programmable data processing device to generate a machine, so the instructions executed by the computer or the processor of the another programmable data processing device generate an apparatus for implementing a specific function in one or more processes in the flowcharts and/or in one or more blocks in the block diagrams.

These computer program instructions can be stored in a computer-readable storage that can instruct the computer or the another programmable data processing device to work in a specific way, so the instructions stored in the computer-readable storage generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

In a typical configuration, a computing device includes one or more processors (CPU), an input/output interface, a network interface, and a memory.

The memory may include a non-persistent memory, a random access memory (RAM), a nonvolatile memory, and/or another form in a computer-readable medium, for example, a read-only memory (ROM) or a flash memory (flash RAM). The memory is an example of the computer-readable medium.

The computer-readable medium includes persistent, non-persistent, removable and non-removable media that can store information by using any method or technology. The information can be computer-readable instructions, a data structure, a program module, or other data. Examples of the computer storage medium include but are not limited to a phase change random access memory (PRAM), a static random access memory (SRAM), a dynamic random access memory (DRAM), another type of random access memory (RAM), a read-only memory (ROM), an electrically erasable programmable read-only memory (EEPROM), a flash memory or another memory technology, a compact disc read-only memory (CD-ROM), a digital versatile disc (DVD) or another optical storage, a cassette magnetic tape, a magnetic tape/magnetic disk storage, another magnetic storage device, or any other non-transmission medium. The computer storage medium can be used to store information accessible by a computing device. Based on the definition in this specification, the computer-readable medium does not include transitory media such as a modulated data signal and carrier.

It is worthwhile to further note that the terms "include", "comprise", or any other variant thereof are intended to cover a non-exclusive inclusion, so that a process, a method, a product, or a device that includes a list of elements not only includes those elements but also includes other elements which are not expressly listed, or further includes elements inherent to such process, method, product, or device. Without more constraints, an element preceded by "includes a ..." does not preclude the existence of additional identical elements in the process, method, product, or device that includes the element.

One or more embodiments of this specification can be described in the general context of computer-executable instructions executed by a computer, for example, a program module. Usually, the program module includes a routine, a program, an object, a component, a data structure, etc. for executing a specific task or implementing a specific abstract data type. The one or more embodiments of this specification can also be practiced in distributed computing environments. In the distributed computing environments, tasks are performed by remote processing devices that are connected through a communication network. In the distributed computing environments, the program module can be located in both local and remote computer storage media including storage devices.

The embodiments in this specification are described in a progressive manner. For the same or similar parts of the embodiments, references can be made to the embodiments. Each embodiment focuses on a difference from other embodiments. Particularly, the system embodiments are basically similar to the method embodiments, and therefore are described briefly. For related parts, references can be made to some descriptions in the method embodiments.

The above-mentioned descriptions are merely embodiments of this disclosure, and are not intended to limit this disclosure. A person skilled in the art can make various changes and variations to this disclosure. Any modification, equivalent replacement, or improvement made without departing from the spirit and principle of this disclosure shall fall within the scope of the claims in this disclosure.

## Claims

1. An event processing method applied to an IoT device, applied to a service client deployed on the IoT device, and comprising:
obtaining call data that are of a service event and that are transferred by a subprogram through a call interface;
querying, in a shared container, an executive identifier corresponding to an interface type of the call interface, wherein the executive identifier is registered in the shared container when a device client is configured with a corresponding executive;
upon determining that the executive identifier is obtained through querying, intercepting the service event, and writing the call data into the shared container; and
reading event data matching the executive in the call data, and transmitting the event data to the device client, so that the device client calls at least one target application to perform event processing.

2. The event processing method applied to an IoT device according to claim 1, wherein the executive identifier is registered in the shared container in the following manner:
obtaining configuration information that is used for configuring an executive corresponding to the executive identifier and that is transferred by the device client; and
writing the executive identifier into the shared container based on obtaining of the configuration information.

3. The event processing method applied to an IoT device according to claim 1, wherein writing the call data into the shared container comprises:
constructing a key value pair by using the executive identifier as a primary key and using the call data as a key value; and
writing the key value pair into the shared container.

4. The event processing method applied to an IoT device according to claim 1, wherein the device client is deployed on the IoT device; and
before the step of obtaining call data that are of a service event and that are transferred by a subprogram through a call interface is performed, the method further comprises:
collecting to-be-verified data based on a device activation instruction submitted by the device client;
uploading the to-be-verified data to a server, to verify whether the to-be-verified data is consistent with device information entered when a device provider of the IoT device performs device registration of the IoT device; and
receiving a verification result delivered by the server, and returning the verification result to the device client based on a callback function.

5. The event processing method applied to an IoT device according to claim 1, wherein reading event data matching the executive in the call data, and transmitting the event data to the device client comprises:
reading location data matching a navigation executive in the call data, and transmitting the location data to a device client on the IoT device; and
correspondingly, calling at least one target application to perform event processing comprises:
loading a navigation application configured by the device client, and transmitting the location data to the navigation application, so that the navigation application performs navigation processing by using device location data of the IoT device as start location data and using the location data as end location data, wherein
the navigation application is configured with a service interface of the service client.

6. The event processing method applied to an IoT device according to claim 1, wherein calling at least one target application to perform event processing comprises:
determining a first target application and a second target application that load the event data; and
inputting the event data into the first target application and the second target application, to load the event data based on an application attribute of the first target application, and load the event data based on an application attribute of the second target application.

7. The event processing method applied to an IoT device according to claim 1, wherein upon determining that the executive identifier is not found through querying, the following operations are performed:
determining a target service application based on the service event, and performing event processing of the service event based on the call data in the target service application; and
configuring the at least one target application with a service interface of the service client, wherein the target service application is a third-party application configured for the IoT device.

8. The event processing method applied to an IoT device according to claim 1, wherein the device client is deployed on the IoT device, and the device client configures an access entry to the subprogram; and
when detecting that the configured access entry to the subprogram is triggered, the device client calls a service interface provided by the service client deployed on the IoT device, to transfer an access request for the subprogram, so that the service client loads the subprogram based on the access request.

9. The event processing method applied to an IoT device according to claim 1, wherein the call data of the service event is determined in the following manner:
performing service processing based on service data entered by a user by using the subprogram, to obtain a service processing result; and
upon determining that an event processing instruction submitted by the user for the service event by using the subprogram is received, determining the call data from the service processing result based on the event processing instruction.

10. The event processing method applied to an IoT device according to claim 1, wherein the IoT device comprises a vehicle-mounted IoT device; and
the vehicle-mounted IoT device comprises an in-vehicle infotainment terminal configured for a vehicle and/or an external terminal device of the vehicle.

11. An event processing apparatus applied to an IoT device, wherein the event processing apparatus is configured to perform the method according to any one of claims 1 to 10.

12. An event processing device applied to an IoT device, comprising:
a processor; and
a storage, configured to store computer-executable instructions, wherein when the computer-executable instructions are executed, the processor is enabled to perform the method according to any one of claims 1 to 10.

13. A storage medium, configured to store computer-executable instructions, wherein when the computer-executable instructions are executed by a processor of a computing device, cause the computing device to perform the method according to any one of claims 1 to 10.
